# EUROPEAN PATENT SPECIFICATION

(11) **EP 2 332 758 B1**
(45) Date of publication and mention of the grant of the patent: **23.05.2012**
(21) Application number: 09178523.8
(22) Date of filing: 09.12.2009
(51) Int. Cl.: B60H 1/00

(54) **Vehicle air conditioning system**
Fahrzeugklimatisierung
Dispositif de climatisation de véhicules

(43) Date of publication of application: 15.06.2011
(73) Proprietor: Suzuki International Europe GmbH, 64625 Bensheim (DE)
(72) Inventor: Do Patrocinio Rodrigues, César, 64319 Pfungstadt (DE)
(74) Representative: Müller, Gerald Christian

(56) References cited:
- WO-A1-2009/122282
- DE-A1-102006 042 160
- US-A- 5 901 572
- US-A1- 2006 048 519
- US-A1- 2008 168 787

## Description

### I. Technical field

The present invention concerns a vehicle air conditioning system especially for cooling the interior of a vehicle by a cooled air flow into the interior whereas the air flow has been cooled by using a thermoelectric element.

### II. Background

Nowadays it is a standard feature of a new vehicle to include an air conditioning system for regulating the temperature and/or humidity within the interior of the vehicle. This applies to vehicles used for passenger transport like cars, busses, trains, subways or even planes as well as to cargo vehicles transporting goods which need specific environmental conditions like flowers, meat or the like.

Most of these air conditioning systems use closed circulation systems of cooling liquids like for example in modern systems CO₂. Therefore such systems according to the state of the art usually include compressors, evaporators, heat exchangers and pressure lines. All of these parts need a rather large space to be installed in the vehicle. Additionally their weight is not negligible and may negatively influence the overall consumption of the vehicle. Most of all, however, the compressor has to be mechanically driven by the motor of the vehicle which may consume up to some kilowatt. This considerably influences the power of the motor and the overall consumption, especially when the motor is not driven with full load but only with partial load.

To sum it up, air conditioning systems according to the state of the art have the following disadvantages:
- the power to drive the compressor is taken from the vehicle motor thus diminishing the power for driving the vehicle,
- the overall system has a considerable weight,
- the rather big components consume a large quantity of space within the front part of the vehicle,
- the system as such is rather expensive,
- the cooling liquid has to be inspected and changed at regular intervals and
- the compressor has to create much more cooling output then being necessary for cooling the interior of the vehicle due to heating losses between the heat exchanger and the outlet nozzles.

US 2008/0168787 A1 discloses a local air conditioning system for a vehicle using a Peltier module in order to cool and heat an air flow. In the local air conditioning system information regarding a user is acquired and the unit is controlled to perform a cooling / heating operation depending on a specific scene based on the acquired information.

DE 10 2006 042 160 discloses a heating / cooling system for a hybrid vehicle including various thermoelectric modules being in thermal contact with devices for storing heat, e.g. circuits filled with a fluid.

US 2006/048 519 discloses an air conditioning system for a vehicle upon which the preamble of apending claim 1 is based.

### III. Description of the invention

### a) Technical problem

It is therefore an object of the invention to provide a simple air conditioning system for a vehicle, which neither consumes much space nor negatively influences the consumption of the vehicle due to excessive weight or usage of the motor power.

### b) Solution

This problem is solved by the air conditioning system according to the features of claim 1. The features of the various subclaims refer to preferable embodiments of the invention.

According to the present invention a vehicle air conditioning system is provided which comprises a main duct for guiding an unconditioned air flow into the vehicle interior. The main duct has a cooling section in which at least one thermoelectric element is positioned such that the cold side of the thermoelectric element is in thermal contact with the air flow through the main duct while the hot side of the thermoelectric element is in thermal contact with an auxiliary duct for dissipation of thermal energy created by the thermoelectric element.

In the frame of the present application the term "thermoelectric element" is to be understood as designating any possible electrical element using the Peltier effect to transfer heat from one side of the element to the other side against a possible temperature gradient with consumption of electrical energy.

A thermoelectric element may for example be manufactured by using two thin ceramic wafers with a series of P and N doped bismuth-telluride semiconductor material sandwiched between them. The ceramic material on both sides of the thermoelectric adds rigidity and provides the necessary electrical insulation. While the N type material has an excess of electrons, the P type material has a deficit of electrons. As electrons move from the P type material to the N type material through an electrical connector, the electrons jump to a higher energy state absorbing thermal energy (cold side). While continuing through the lattice of material, the electrons flow from the N type material to the P type material through an electrical connector, dropping to a lower energy state and releasing energy as heat to the heat sink (hot side). Thus one piece of P type material and one piece of N type material each make up a thermoelectric couple. These thermoelectric couples are electrically connected in series and thermally in parallel. A thermoelectric element may contain one to several hundred of such couples according to the cooling power needed.

According to one embodiment not being part of the present invention the auxiliary duct may be filled with a cooling liquid. In this case the auxiliary duct is part of a cooling liquid circuit in which the cooling liquid is circulated by a circulating system in order to dissipate the heat created on the hot side of the thermoelectric element. This special construction of the auxiliary duct provides a rather high efficiency of the air conditioning system with the possibility to use small components.

According to the present invention the auxiliary duct diverts from the main duct in a position upstream of the cooling section of the main duct so that a first part of the unconditioned air flow is diverted into the auxiliary duct. Thus the first part of the unconditioned air flow through the auxiliary duct is in thermal contact with the hot side of the thermoelectric element and may therefore take up the heat created on the hot side of the thermoelectric element. After passing through the auxiliary duct the thus heated air flow may be directed to the exterior of the vehicle. Of course the energy contained in the heated air flow may be used otherwise in the vehicle.

The cooling section of the main duct is at least partially surrounded by the auxiliary duct thus providing a maximum contact surface for energy dissipation.

Advantageously the cooling section of the main duct and the auxiliary duct may at least in sections be arranged concentrically with the auxiliary duct surrounding the cooling section. In the present application the term "concentrically" is not meant to necessarily imply circular cross sections of the respective ducts. The ducts may rather have any possible suitable cross section, i.e. rectangular, oval or the like.

In this context it is pointed out that the main duct may also consist of several separate ducts of a rather small diameter each of these ducts having a cooling section containing one or more thermoelectric elements. In that case at least some of these separate small diameter ducts are positioned within the auxiliary duct for heat dissipation.

In order to increase the cooling efficiency the cooling section of the main duct may include surface elements to enlarge the contact surface with the air flow through the cooling section, the surface elements being at least partly in thermal contact with the cold side of the thermoelectric element. Such elements may for example have a honeycomb structure to maximise strength as well as contact surface.

In a preferred embodiment of the present invention such surface elements consist of a material with a high thermal conductivity, e.g. thin metal sheets made of copper or aluminium. As an alternative the cross section of the cooling section of the main duct itself may be such that the contact surface with the air flow is maximised. For example a star like cross section may be used in the cooling section of the main duct.

The cooling of the air flow in the cooling section of the main duct may lead to condensation of the water contained in the unconditioned air on the cold surface of the thermoelectric element. Therefore the cooling section of the main duct may include a condense water drain for evacuating such condense water. Advantageously the condense water drain is positioned at the lowest point of the cooling section so that water condensing out of the air flow passing the cooling section substantially flows into the condense water drain due to gravitation only.

The cooling section of the main duct may further include at least one overflow element preventing condense water to flow into the vehicle interior and/or in the main duct upstream of the cooling section. Such overflow elements may for example consist of steps in the surface of the cooling section, lugs at the entrance and/or exit of the cooling section or the like.

To discharge the condense water the air conditioning system according to the present invention may further include a drainage conduit connecting the condense water drain of the cooling section with the exterior of the vehicle or a water container, e.g. the container for supplying water for cleaning the windshield. The drainage conduit preferably is in thermal contact with the air flow through the auxiliary duct downstream of the position of the hot side of the thermoelectric element. Thus freezing of the condense water in the drainage conduit due to low ambient temperatures outside the vehicle may be avoided due to the heating effect of the heated air flow.

The thermoelectric element may be equipped with a temperature control device so that the electric voltage/power applied to the thermoelectric element is controlled according to the needed cooling performance or any other environmental conditions. The temperature control device may therefore include a temperature sensor being located at any suitable position inside the interior of the vehicle being and may be coupled to an input device on the drivers/operators console. Thus the driver/operator inside the vehicle may set a nominal temperature via the input device and the temperature control device will use the set nominal temperature value as well as the actual temperature inside the vehicle for controlling the electric voltage/power applied to the thermoelectric element. Additionally the temperature control device may include a further sensor element sensing the temperature of the cold side of the thermoelectric element to prevent a cooling of the surface of the cold side of the thermoelectric element below 2 - 3 ° C. Thus freezing and ice formation on the surface of the cold side of the thermoelectric element may be avoided.

In a preferred embodiment of the air conditioning system of the present invention the cooling section of the main duct comprises two subsections which are inclined with respect to each other and possible with respect to the horizontal. In such cases the condense water drain is positioned at the lowest transition point between the subsections so that condense water may flow into the drain from both of the subsections. Preferably the subsections are separated by a groove in which the condense water drain is formed. In this case the edges of the groove may additionally act as an overflow element as described above.

### c) Preferred embodiments

Preferable embodiments of the present invention are described in the following by the way of example only whereby reference is made to the enclosed figures:
- Fig. 1:: a schematic longitudinal cross section of a first preferred embodiment of a vehicle air conditioning system according to the present invention;
- Fig. 2:: a cross sectional view of the embodiment of Fig. 1 seen along line A-A;
- Fig. 3:: a longitudinal cross section of a second preferred embodiment of a vehicle air conditioning system according to the present invention and
- Fig. 4:: a longitudinal cross section of an embodiment of a vehicle air conditioning system not being part of the present invention.

In the following figures identical reference signs are used for corresponding elements of the various embodiments.

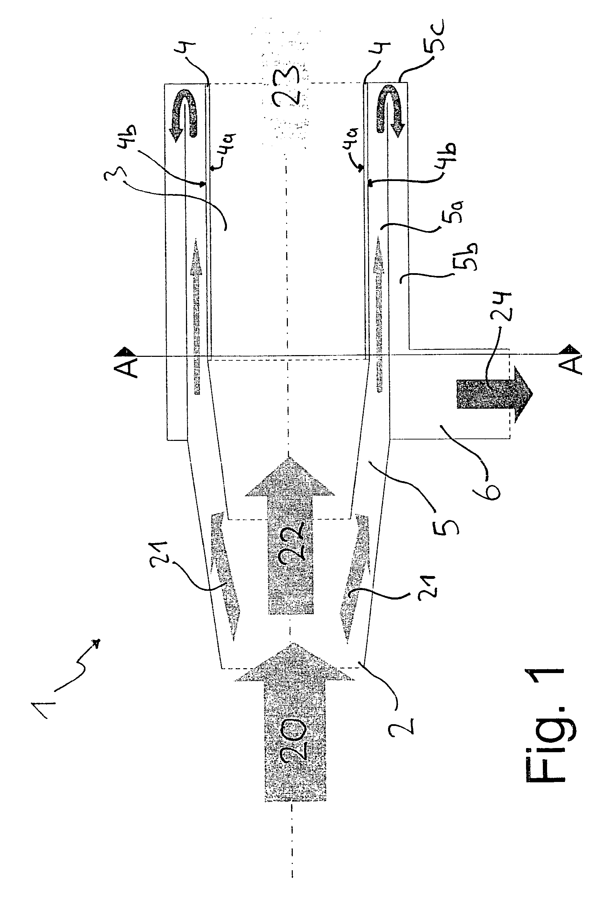

Figure 1 shows a first embodiment of a vehicle air conditioning system 1 according to the present invention. The system 1 comprises a main duct 2 for guiding an unconditioned air flow 20 into the vehicle interior (not shown). Within a cooling section 3 of the main duct 2 a thermoelectric element 4 is positioned. For the sake of clarity neither any of the electrical components used for powering the thermoelectric element 4 nor the respective electrical connections are shown in the figures. However, the circuitry and controlling of thermoelectric elements are well known to a person skilled in the arts.

Upstream of the cooling section 3 an auxiliary duct 5 diverts from the main duct 2 so that a first part 21 of the unconditioned air flow 20 is diverted into the auxiliary duct 5 whereas a second part 22 of the unconditioned air flow 20 continues flowing through the main duct 2 and into the cooling section 3. After having passed the cooling section 3 the then conditioned air flow 23 in guided into the interior of the vehicle.

For cooling the second part 22 of the unconditioned air flow 20 flowing through the cooling section 3 the cold side 4a of the thermoelectric element 4 is in thermal contact with the air flow 22.

In order to dissipate the thermal energy created on the hot side 4b of the thermoelectric element 4 the first part 21 of the unconditioned air flow 20 which had been diverted into the auxiliary duct 5 is guided over the hot side 4b of the thermoelectric element 4 and thus takes up thermal energy. After having passed over the hot side 4b of the thermoelectric element 4 the thus heated air flow 24 is guided to an exhaust duct 6 which may be directed to the exterior of the vehicle or lead to another part of the vehicle in which the heated air flow 24 may be used in any suitable way.

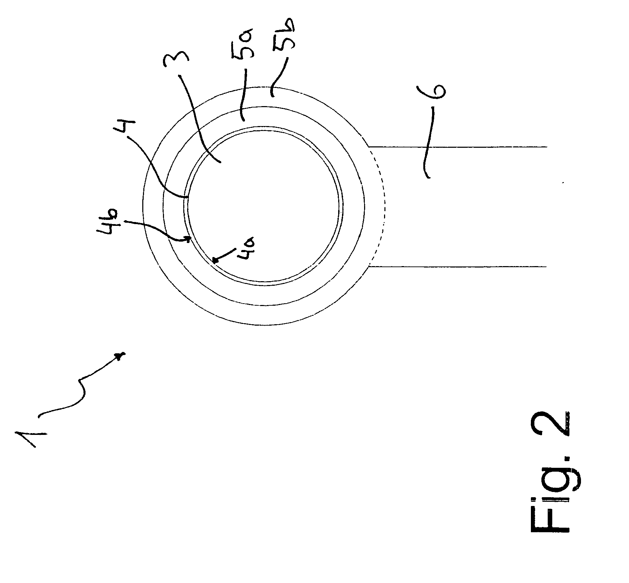

As may be seen from figure 2 the thermoelectric element 4 mainly has an annular form in the shown embodiment and separates the cooling section 3 of the main duct 2 and the auxiliary duct 5 whereas these two elements are arranged concentrically with the cooling section 3 being positioned within the auxiliary duct 5.

The auxiliary duct 5 itself consists of two concentrically arranged parts 5a, 5b. After having passed the inner part 5a of the auxiliary duct 5, in which the air flow 21 is guided over the hot side 4b of the thermoelectric element 4, the flowing direction of the air flow 21 is reversed by an end wall 5c and guided into the outer part 5b of the auxiliary duct.

Both parts 5a, 5b of the auxiliary duct 5 essentially have the form of a hollow cylinder in the present case. The outer part 5b of the auxiliary duct 5 is connected to the exhaust duct 6, which in the present case is directed downwards.

In the embodiment shown in figures 1 and 2 the main duct 2 as well as the inner part 5a of the auxiliary duct 5 are conically tapered towards the upstream end.

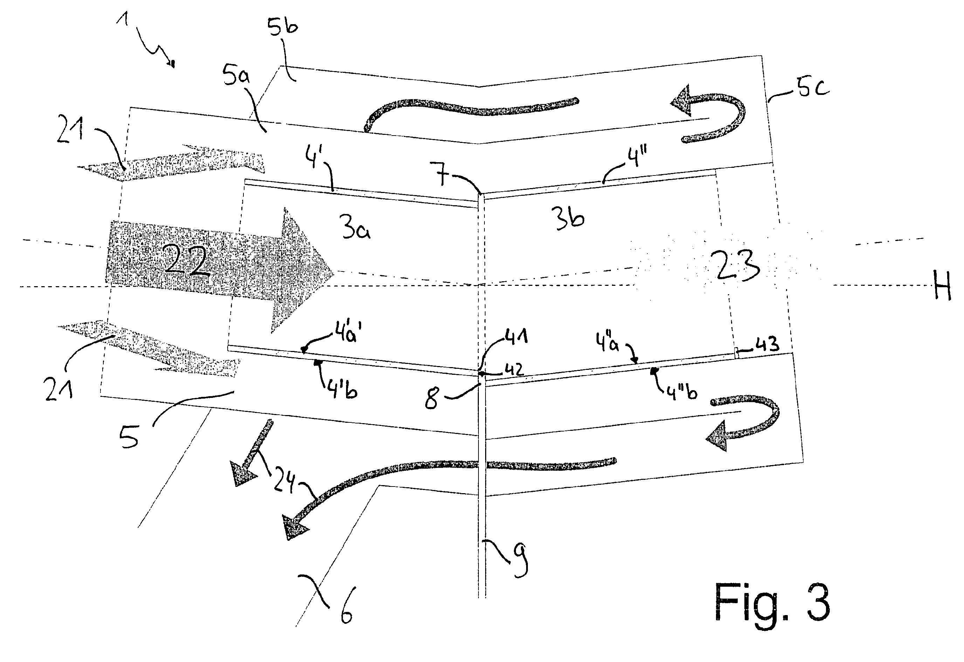

Figure 3 shows another embodiment of a vehicle air conditioning system according to the present invention.

As before system 1 comprises a main duct 2 for guiding the unconditioned air flow 20 into the vehicle interior (not shown) with a thermoelectric element 4 being positioned within a cooling section 3 of the main duct 2. As in the embodiment shown in figure 1 an auxiliary duct 5 diverts from the main duct 2 upstream of the cooling section 3 so that a first part 21 of the unconditioned air flow 20 is diverted into the auxiliary duct 5 whereas a second part 22 of the unconditioned air flow 20 continues flowing through the main duct 2 into the cooling section 3 and is finally guided into the interior of the vehicle.

However, in contrast to the embodiment shown in figure 1 the cooling section 3 comprises two subsections 3a and 3b and in each subsection a thermoelectric element 4', 4" is positioned such that the respective cold sides 4'a, 4"a of the thermoelectric elements 4', 4" are in thermal contact with the air flow 22 through the main duct 2.

Similar to the embodiment of figure 1 both parts 4', 4" of the thermoelectric element 4 each have substantially the form of a hollow cylinder. The two parts 4' and 4" of the thermoelectric element 4 and thus the two subsections 3a and 3b of the cooling section 3 are arranged one after the other in longitudinal direction of the main duct 2 with both parts 4', 4" being inclined by several degrees with respect to the horizontal direction H. Whereas the first part 4' of the thermoelectric element 4 slopes when seen in the flowing direction of the air flow 22, the second part 4" of the thermoelectric element 4 rises when seen in the flowing direction of the air flow 22.

An annular groove 7 is formed at the transition between the two subsections 3a,b of the main duct 3 in order to collect water condensing out of the air flow 22 passing the cooling section 3. Due to the inclinations of the two parts 4' and 4" of the thermoelectric element 4 with respect to the horizontal direction H water condensing on the parts 4' and 4" of the thermoelectric element 4 will flow into the annular groove 7 between the parts 4' and 4" due to gravity.

A condense water drain 8 is positioned at the lowest part of the annular groove 7 so that condense water accumulating in the annular groove 7 will substantially flow into the condense water drain 8 due to gravity as well.

A drainage conduit 9 connects the condense water drain 8 with the exterior of the vehicle in order to evacuate the condense water. As can be seen in figure 3 the drainage conduit 9 crosses the auxiliary duct 5 twice and thus is in thermal contact with the air flow 24 through the auxiliary duct 5 being heated by the hot sides 4'b and 4"b of the two parts 4' and 4" of the thermoelectric element 4. Therefore a freezing of the condense water within the drainage conduit 9 due to cold ambient temperatures outside the vehicle may be avoided.

In the example shown in figure 3 the second part 4" of the thermoelectric element 4 has a slightly larger diameter then the first part 4' of the thermoelectric element 4. Thus the inner edge 41 of the downstream front wall 42 of the first part 4' of the thermoelectric element 4 defines an overflow element preventing condense water to flow back into the main duct 2 upstream of the cooling section 3.

Another overflow element is defined by a lug 43 being positioned at the lower part of the downstream end of the second part 4" of the thermoelectric element 4 preventing condense water from flowing into the vehicle interior. Although not shown in the figures it is obvious that lug 43 may also be present in the upper part of the downstream end of the second part 4" of the thermoelectric element 4, e.g. in form of an annular lug.

Although not shown in the figures it may also be possible to provide a third overflow element at the upstream end of the first part 4' of the thermoelectric element 4 in order to prevent a flow of condense water into the auxiliary duct 5.

A flow of condense water from the cooling section 3 into the vehicle interior or back into the auxiliary duct 5 and thus against the rising inclinations of the first or second part 4', 4" of the thermoelectric element 4 may for example be induced by sudden movements of the vehicle, i.e. hard braking or fast acceleration.

Similar as in the embodiment of figure 1 the first part 21 of the unconditioned air flow 20 which had been diverted into the auxiliary duct 5 is guided over the hot sides 4'b and 4"b of the thermoelectric element 4 thus taking up thermal energy created on the hot sides 4'b and 4"b of the thermoelectric element 4. The thus heated air flow 24 is guided to the exhaust duct 6.

In the embodiments shown in figures 1 through 3 dissipation of the thermal energy created on the hot sides 4b, 4'b, 4"b of the thermoelectric element 4 is achieved by directing a first part 21 of the unconditioned air flow 20 through an auxiliary duct 5 diverting from the main duct 2 in a position upstream of the cooling section 3.

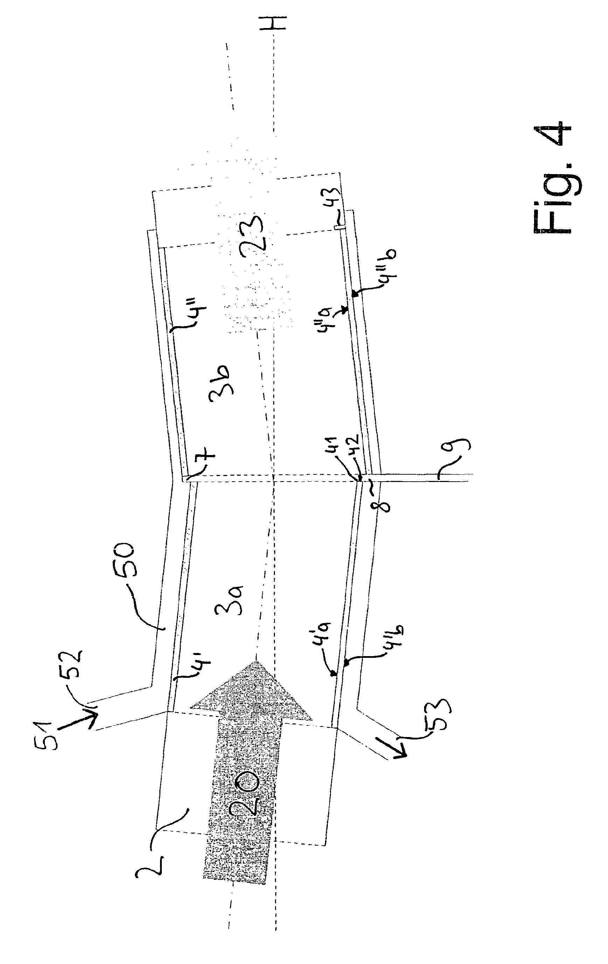

Figure 4 shows an alternative way of energy dissipation not being part of the present invention in which all of the unconditioned air stream 20 is directed into the main duct 2 and through the cooling section 3 consisting of two subsections 3a and 3b with respective first and second parts 4' and 4" of the thermoelectric element 4. Again the cooling section 3 of the air conditioning system 1 is concentrically surrounded by an auxiliary duct 50 which in the embodiment shown is filled with a cooling liquid 51 entering through an inlet 52, and being discharged through an outlet 53. In this case the auxiliary duct 50 is part of a (not shown) cooling liquid circuit in which the cooling liquid 51 is circulated by a (not shown) circulating system.

Although the inlet 52 and outlet 53 are shown to be both positioned at the upstream end of the cooling section 3 is it obvious that it is possible to position the inlet 52 and the outlet 53 at different positions, e.g. at different ends of the cooling section 3 in order to enhance the flow of the cooling liquid 51 through the auxiliary duct 50. In this context the cooling liquid inlet (52) and outlet (53) of figure 4 may be arranged such that the thermo-syphon effect is maximised by supporting the natural flow trend of fluids, i.e. warm fluid flowing vertically upwards. Thus the pumping power of the cooling liquid circuit may be reduced.

As in the embodiment of figure 3 the subsections 3a and 3b of the cooling section 3 and thus the first and second parts 4' and 4" of the thermoelectric element 4 are each inclined by several degrees with respect to the horizontal direction H.

The embodiment of figure 4 also includes an annular groove 7, a condense water drain 8 and a drainage conduit 9 as well as overflow elements 41 and 43 as described before in connection with the embodiment shown in figure 3.

### Reference signs

- 1: air conditioning system
- 2: main duct
- 3: cooling section
- 3a, 3b: subsections of 3
- 4: thermoelectric element
- 4',4": parts of 4
- 4a: cold side of 4
- 4a': cold side of 4'
- 4a": cold side of 4"
- 4b: hot side of 4
- 4b': hot side of 4'
- 4b": hot side of 4"
- 5: auxiliary duct
- 5a: inner part of 5
- 5b: outer part of 5
- 5c: end wall of 5
- 6: exhaust duct
- 7: annular groove
- 8: condense water drain
- 9: draining conduct
- 20: unconditioned airstream
- 21: part of 21 through 5
- 22: part of 21 through 2
- 23: conditioned air flow
- 24: heated air flow
- 41: edge
- 42: front wall
- 43: lug
- 50: auxiliary duct
- 51: cooling liquid
- 52: inlet of 50
- 53: outlet of 50
- H: horizontal

## Claims

1. Vehicle air conditioning system (1) comprising
- a main duct (2) for guiding an unconditioned air flow (20) into the vehicle interior,
- at least one thermoelectric element (4) being positioned in a cooling section (3) of the main duct (2) such that a cold side (4a) of the thermoelectric element (4) is in thermal contact with the air flow (20,22) through the main duct (2),
wherein a hot side (4b) of the thermoelectric element (4) is in thermal contact with an auxiliary duct (5,50) for dissipation of thermal energy and wherein the cooling section (3) is at least partially surrounded by the auxiliary duct (5,50), **characterized in that** the auxiliary duct (5) diverts from the main duct (2) in a position upstream of the cooling section (3) of the main duct (2) so that a first part (21) of the unconditioned air flow (20) is diverted into the auxiliary duct (5) wherein the hot side (4b) of the thermoelectric element (4) is in thermal contact with the air flow (21) through the auxiliary duct.

2. Vehicle air conditioning system (1) according to claim 1,
**characterized by**
the cooling section (3) of the main duct (2) and the auxiliary duct (5,50) being at least in sections arranged concentrically with the auxiliary duct (5,50) surrounding the cooling section (3).

3. Vehicle air conditioning system (1) according to one of the preceding claims,
**characterized by**
the cooling section (3) of the main duct (2) including surface elements to enlarge the contact surface with the air flow (22) through the cooling section (3) with the surface elements being at least partly in thermal contact with the cold side (4a) of the thermoelectric element (4).

4. Vehicle air conditioning system (1) according to claim 3,
**characterized by**
the surface elements consisting of material with a high thermal conductivity.

5. Vehicle air conditioning system (1) according to one of the preceding claims,
**characterized by**
the cooling section (3) of the main duct (2) including a condense water drain (8) for evacuating water condensing out of the air flow (22) passing the cooling section (3).

6. Vehicle air conditioning system (1) according to claim 5,
**characterized by**
the condense water drain (8) being positioned at the lowest point of the cooling section (3) so that water condensing out of the air flow (22) passing the cooling section (3) substantially flows into the condense water drain (8) by gravitation.

7. Vehicle air conditioning system (1) according to claim 5 or claim 6,
further including a drainage conduit (9) connecting the condense water drain (8) of the cooling section (3) with the exterior of the vehicle, the drainage conduit (9) being in thermal contact with the air flow (21) through the auxiliary duct (5) downstream of the position of the hot side (4b) of the thermoelectric element (4).

8. Vehicle air conditioning system (1) according to one of the preceding claims 5 through 7,
**characterized by**
the cooling section (3) of the main duct (2) comprising two subsections (3a,3b) being inclined with respect to each other with the condense water drain (8) being positioned at the lowest transition point between the subsections (3a,3b).

9. Vehicle air conditioning system (1) according to claim 8,
**characterized by**
the subsections (3a,3b) being separated by a groove (7) in which the condense water drain (8) is formed.

10. Vehicle air conditioning system (1) according to one of the preceding claims
**characterized by**
the cooling section (3) of the main duct (2) including at least one overflow element (41,43) preventing condense water to flow into the vehicle interior and/or in the main duct (2) upstream of the cooling section (3).

## Patentansprüche

1. Fahrzeugklimaanlage (1), umfassend
- einen Hauptkanal (2) zum Leiten eines unklimatisierten Luftstroms (20) in das Fahrzeuginnere,
- wenigstens ein thermoelektrisches Element (4), welches derart in einem Kühlabschnitt (3) des Hauptkanals (2) angeordnet ist, das seine kalte Seite (4a) des thermoelektrischen Elements (4) in thermischem Kontakt mit dem Luftstrom (20,22) durch den Hauptkanal (2) steht,
wobei eine heiße Seite (4b) des thermoelektrischen Elements (4) zur Ableitung thermischer Energie in thermischem Kontakt mit einem Hilfskanal (5,50) steht und wobei der Kühlabschnitt (3) wenigstens teilweise von dem Hilfskanal (5,50) umgeben ist,
**dadurch gekennzeichnet, dass**
der Hilfskanal (5) an einer Stelle stromaufwärts des Kühlabschnitts (3) des Hauptkanals (2) von dem Hauptkanal (2) abzweigt, so dass ein erster Teil (21) des unklimatisierten Luftstroms (20) in den Hilfskanal (5) abgezweigt wird, wobei die heiße Seite (4b) des thermoelektrischen Elements (4) in thermischem Kontakt mit dem Luftstrom (21) durch den Hilfskanal steht.

2. Fahrzeugklimaanlage (1) nach Anspruch 1,
**dadurch gekennzeichnet, dass**
der Kühlabschnitt (3) des Hauptkanals (2) und des Hilfskanals (5,50) wenigstens abschnittsweise konzentrisch zu dem Hilfskanal (5,50) angeordnet ist, der den Kühlabschnitt (3) umgibt.

3. Fahrzeugklimaanlage (1) nach einem der vorangehenden Ansprüche,
**dadurch gekennzeichnet, dass**
der Kühlabschnitt (3) des Hauptkanals (2) Oberflächenelemente enthält, welche die Kontaktoberfläche mit dem Luftstrom (22) durch den Kühlabschnitt (3) vergrößern, wobei die Oberflächenelemente wenigstens teilweise in thermischem Kontakt mit der kalten Seite (4a) des thermoelektrischen Elements (4) stehen.

4. Fahrzeugklimaanlage (1) nach Anspruch 3,
**dadurch gekennzeichnet, dass**
die Oberflächenelemente aus einem Material mit einer hohen thermischen Leitfähigkeit bestehen.

5. Fahrzeugklimaanlage (1) nach einem der vorangehenden Ansprüche,
**dadurch gekennzeichnet, dass**
der Kühlabschnitt (3) des Hauptkanals (2) einen Kondenswasserablauf (8) zum Entfernen von Wasser aufweist, das aus dem den Kühlabschnitt (3) passierenden Luftstrom (22) kondensiert.

6. Fahrzeugklimaanlage (1) nach Anspruch 5,
**dadurch gekennzeichnet, dass**
der Kondenswasserablauf (8) an dem niedrigsten Punkt des Kühlabschnitts (3) angeordnet ist, so dass Wasser, das aus dem den Kühlabschnitt (3) passierenden Luftstrom (22) kondensiert, im Wesentlichen aufgrund von Gravitation in den Kondenswasserablauf (8) fließt.

7. Fahrzeugklimaanlage (1) nach Anspruch 5 oder Anspruch 6,
des Weiteren umfassend eine Ablaufleitung (9), die den Kondenswasserablauf (8) des Kühlabschnitts (3) mit dem Äußeren des Fahrzeugs verbindet, wobei die Ablaufleitung (9) an einer Stelle stromabwärts der heißen Seite (4b) des thermoelektrischen Elements (4) in thermischem Kontakt mit dem Luftstrom (21) durch den Hilfskanal (5) steht.

8. Fahrzeugklimaanlage (1) nach einem der vorangehenden Ansprüche 5-7,
**dadurch gekennzeichnet, dass**
der Kühlabschnitt (3) des Hauptkanals (2) zwei zueinander geneigt angeordnete Unterabschnitte (3a,3b) umfasst, wobei der Kondenswasserablauf (8) an dem niedrigsten Übergangspunkt zwischen den Unterabschnitten (3a,3b) angeordnet ist.

9. Fahrzeugklimaanlage (1) nach Anspruch 8,
**dadurch gekennzeichnet, dass**
die Unterabschnitte (3a,3b) von einer Nut (7) getrennt werden, in welcher der Kondenswasserablauf (8) ausgebildet ist.

10. Fahrzeugklimaanlage (1) nach einem der vorangehenden Ansprüche,
**dadurch gekennzeichnet, dass**
der Kühlabschnitt (3) des Hauptkanals (2) wenigstens ein Überlaufelement (41,43) aufweist, welches verhindert, dass Kondenswasser in das Fahrzeuginnere und/oder in den Hauptkanal (2) stromaufwärts des Kühlabschnitts (3) fließt.

## Revendications

1. Système de conditionnement d'air pour véhicules (1) comprenant
- un conduit principal (2) pour guider un flux d'air non conditionné (20) à l'intérieur du véhicule,
- au moins un élément thermoélectrique (4) qui est positionné dans une section de refroidissement (3) du conduit principal (2) de manière qu'un côté froid (4a) de l'élément thermoélectrique (4) se trouve en contact thermique avec le flux d'air (20, 22) à travers le conduit principal (2),
dans lequel un côté chaud (4b) de l'élément thermoélectrique (4) se trouve en contact thermique avec un conduit auxiliaire (5,50) pour la dissipation de l'énergie thermique et dans lequel la section de refroidissement (3) est au moins partiellement entourée du conduit auxiliaire (5, 50), **caractérisé en ce que** le conduit auxiliaire (5) est dérivé du conduit principal (2) dans une position en amont de la section de refroidissement (3) du conduit principal (2) de manière qu'une première partie (21) du flux d'air non conditionné (20) est dérivée dans le conduit auxiliaire (5), le côté chaud (4b) de l'élément thermoélectrique (4) étant en contact thermique avec le flux d'air (21) à travers le conduit auxiliaire.

2. Système de conditionnement d'air pour véhicules (1) suivant la revendication 1, **caractérisé en ce que** la section de refroidissement (3) du conduit principal (2) et le conduit auxiliaire (5,50) sont au moins par sections disposés de manière concentrique, le conduit auxiliaire (5, 50) entourant la section de refroidissement (3).

3. Système de conditionnement d'air pour véhicules (1) suivant une des revendications précédentes, **caractérisé en ce que** la section de refroidissement (3) du conduit principal (2) comprend des éléments de surface pour élargir la surface de contact avec le flux d'air (22) à travers la section de refroidissement (3), les éléments de surface étant au moins partiellement en contact thermique avec le côté froid (4a) de l'élément thermoélectrique (4).

4. Système de conditionnement d'air pour véhicules (1) suivant la revendication 3, **caractérisé en ce que** les éléments de surface sont en un matériau avec une conductivité thermique élevée.

5. Système de conditionnement d'air pour véhicules (1) suivant une quelconque des revendications précédentes, **caractérisé en ce que** la section de refroidissement (3) du conduit principal (2) comprend un canal de drainage d'eau de condensation (8) permettant d'évacuer l'eau de condensation dégagée par le flux d'air (22) passant à travers la section de refroidissement (3).

6. Système de conditionnement d'air (1) suivant la revendication 5, **caractérisé en ce que** le canal d'eau de condensation (8) est positionné au point le plus bas de la section de refroidissement (3) de manière que l'eau de condensation dégagée par le flux d'air (22) passant à travers la section de refroidissement (3) s'écoule essentiellement dans le canal de drainage d'eau de condensation (8) par gravitation.

7. Système de conditionnement d'air (1) suivant la revendication 5 ou 6, comprenant en outre un conduit d'évacuation (9) reliant le canal de drainage d'eau de condensation (8) de la section de refroidissement (3) à l'extérieur du véhicule, le conduit d'évacuation (9) étant en contact thermique avec le flux d'air (21) à travers le conduit auxiliaire (5) en aval de la position du côté chaud (4b) de l'élément thermoélectrique (4).

8. Système de conditionnement d'air (1) suivant une quelconque des revendications précédentes 5 à 7, **caractérisé en ce que** la section de refroidissement (3) du conduit principal (2) comprend deux sous-sections (3a, 3b) qui sont inclinées l'une par rapport à l'autre, le canal de drainage d'eau de condensation (8) étant positionné au point de transition le plus bas entre les sous-sections (3a, 3b).

9. Système de conditionnement d'air (1) suivant la revendication 8, **caractérisé en ce que** les sous-sections (3a, 3b) sont séparées par une rainure (7) dans laquelle est formé le canal de drainage d'eau de condensation (8).

10. Système de conditionnement d'air (1) suivant une quelconque des revendications précédentes, **caractérisé en ce que** la section de refroidissement (3) du conduit principal (2) comprend au moins un élément de débordement (41, 43) empêchant l'eau de condensation de s'écouler à l'intérieur du véhicule et/ou dans le conduit principal (2) en amont de la section de refroidissement (3).
